# NEUE EUROPÄISCHE PATENTSCHRIFT

(11) **EP 1 316 388 B2**
(45) Veröffentlichungstag und Bekanntmachung des Hinweises auf die Entscheidung über den Einspruch: **04.03.2009**
(45) Hinweis auf die Patenterteilung: 21.09.2005
(21) Anmeldenummer: 02024138.6
(22) Anmeldetag: 30.10.2002
(51) Int. Cl.: B23Q 37/00, B23Q 11/08, B23Q 41/04

(54) **Zentralkammer**
Processing chamber
Chambre de traitement

(30) Priorität: 30.10.2001 DE 10153073; 23.09.2002 DE 10245723
(43) Veröffentlichungstag der Anmeldung: 04.06.2003
(73) Patentinhaber: teamtechnik Maschinen und Anlagen GmbH, 71691 Freiberg (DE)
(72) Erfinder: Reinisch, Hubert, Dr., c/o teamtechnik Masch. u., 71691 Freiberg (DE); Weiler, Thomas, 74379 Ingersheim (DE); Rudert, Michael, 71229 Leonberg-Höfingen (DE)
(74) Vertreter: Lindner, Michael

(56) Entgegenhaltungen:
- EP-A- 0 743 137
- EP-B- 0 299 247
- DE-A- 2 106 595
- US-A- 4 727 237

## Beschreibung

Die vorliegende Erfindung betrifft eine Zentralkammer-Vorrichtung für Fertigungs- und Prüfvorgänge zum Aufbau von universellen Prozessmodulen, insbesondere Laser-/Optik-Prozessmodulen oder von laserunterstützten Prozessmodulen, mit zumindest einem zumindest eine Anbindungsfläche aufweisenden Wandelement und einem Deckelement, die miteinander verbunden sind und einen ein zu bearbeitendes Werkstück aufnehmenden Prozessraum umgeben, wobei dem Wandelement oder dem Deckelement eine Bearbeitungseinheit zuordenbar ist. Die Erfindung betrifft des weiteren eine Bearbeitungsstation mit zumindest einem Prozessmodul zur Ausführung einer vorgegebenen Funktion, insbesondere einer optischen Funktion.

Bearbeitungsstationen der vorgenannten Art sind allgemein bekannt.

EP-A1-0 743 137 offenbart bspw. eine Bearbeitungsmaschine, die eine von eine Hüllkörperkonstruktion umschlossene Bearbeitungszelle bzw. Arbeitsraum aufweist.

Eine Bearbeitungsstation der eingangs genannten Art ist üblicherweise Teil eines modularen Bearbeitungs-, Montage- und Prüfsystems, das zur Bearbeitung, Montage und Prüfung von Produkten dient. Innerhalb des Fertigungs- und Prüfsystems kommt jeder Bearbeitungsstation zumindest eine bestimmte Funktion zu, die an dem Produkt durchgeführt werden soll. Beispielsweise kann eine Funktion darin bestehen, zwei Gehäuseteile miteinander zu verbinden. Eine andere Funktion besteht darin, ein Gehäuseteil per Laser zu beschriften. Diese Funktionen werden in den Bearbeitungsstationen automatisch durchgeführt. Daneben umfasst ein Fertigungssystem beispielsweise auch manuelle Bearbeitungsstationen, wo die Funktionen manuell ausgeführt werden, sowie reine Transferstationen, die lediglich zum Weitertransport der mit den Produkten bestückten Paletten bzw. Werkstückträgern dienen.

In der Druckschrift DE 197 41 671 A1 sind Bearbeitungsstationen gezeigt, die mehrere sogenannte Prozessmodule umfassen. Diese Prozessmodule sind jeweils in sich abgeschlossene autarke Vorrichtungen, die eine bestimmte Funktion ausüben. Da eine Bearbeitungsstation mehrere solcher Prozessmodule aufnehmen kann, ist es somit möglich, in einer Bearbeitungsstation mehrere Funktionen auszuüben.

Aufgrund des modularen Aufbaus der Prozessmodule lassen sich diese mit sehr wenig Aufwand in die Bearbeitungsstation einsetzen sowie aus dieser wieder herausnehmen. Neben dem Einstecken der notwendigen Verbindungsstecker für die Versorgungsmedien, wie Druckluft, elektrische Energie etc., ist es zur Inbetriebnahme des jeweiligen Prozessmoduls notwendig, das zur Steuerung der Funktion notwendige Programm in eine zentrale Basis-Steuereinrichtung der Bearbeitungsstation oder in eine dezentrale Steuerung des Prozessmoduls einzuspielen, wo es dann autark auf einem dezentralen Prozessor oder zusammen mit den anderen Programmen der anderen Prozessmodule zum Ablauf gelangt. Bei der Basis-Steuereinrichtung handelt es sich beispielsweise um eine sogenannte SPS oder einen Microcontroller.

Wie bereits erwähnt, dient ein Prozessmodul beispielsweise dazu, ein Gehäuseteil per Laser zu beschriften. Sicherheitsvorschriften machen es hierbei erforderlich, dass das zu beschriftende Produkt in einem lichtdichten Raum, nachfolgend als Prozessraum bezeichnet, bearbeitet wird. Dieser Prozessraum lässt sich beispielsweise mit Hilfe von mehreren Wandelementen und einem
Deckelement aufbauen. In eines der Wandelemente oder in das Deckelement wird zum Einbringen des Laserlichts in den Prozessraum eine entsprechende Öffnung vorgesehen.

Bei dieser Vorrichtung zur Ausbildung eines Prozessraums, nachfolgend als Zentralkammer-Vorrichtung bezeichnet, bleibt der Wunsch bestehen, auch in diesem Bereich eine "Modularisierung" herbeizuführen. Das heißt mit anderen Worten, dass der Wunsch besteht, die Zentralkammer-Vorrichtung flexibel einsetzbar auszugestalten.

Vor diesem Hintergrund besteht die Aufgabe der vorliegenden Erfindung darin, die Zentralkammer-Vorrichtung der eingangs genannten Art so weiterzubilden, dass sie flexibel einsetzbar ist und den Aufbau von universellen Prozessmodulen erlaubt.

Diese Aufgabe wird mit der Zentralkammer-Vorrichtung nach Anspruch 1 gelöst.

Der Vorteil dieser Zentralkammer-Vorrichtung liegt nun darin, dass sie universell einsetzbar ist. Dadurch, dass jede Anbindungsfläche so ausgestattet ist, dass eine Bearbeitungseinheit anbringbar ist, lässt sich die Vorrichtung innerhalb kürzester Zeit auf die unterschiedlichsten Bedürfnisse anpassen. Es ist nun nicht mehr notwendig, die ganze Zentralkammer-Vorrichtung auszutauschen, wenn beispielsweise die per Laser durchgeführte Beschriftung eines Produkts nicht mehr von oben, sondern von der Seite ausgeführt werden soll. Die Bearbeitungseinheit, beispielsweise in Form einer Laseroptik, muss lediglich von der oberen Seite an eine seitliche Anbindungsfläche über das Anbringungsmittel angebracht werden. Da eine Öffnung in den Prozessraum bereits vorhanden ist, müssen folglich keine weiteren Bearbeitungsschritte vorgenommen werden.

Die genannten Maßnahmen haben ebenfalls den Vorteil, dass der Prozessraum bei eingebrachtem Werkstück, das auf einem Werkstückträger liegt, lichtdicht abgeschlossen ist. Der Werkstückträger drückt nämlich auf das Abdichtelement des Schleusenelements, das die gesamte Schleusenöffnung umgibt. Eine weitere Funktion des Schleusenelements ist das Ermöglichen einer abgedichteten Dreh- bzw. Schwenkbewegung des Werkstückträgers oder des Werkstücks.

An dieser Stelle sei angemerkt, dass unter dem Begriff "Bearbeitungseinheit" im Sinne der vorliegenden Erfindung jegliche aktive oder passive Einheit zu verstehen ist, die an einer Anbindungsfläche anbringbar sein soll. Im einfachsten Fall handelt es sich bei der Bearbeitungseinheit beispielsweise um eine Abdeckplatte, die die in der Anbindungsfläche vorgesehene Öffnung abdeckt. Andere aktive Bearbeitungseinheiten sind beispielsweise eine Laseroptikeinheit, eine Zulufteinheit, eine Ablufteinheit, Materialzuführeinheiten, wie z.B. Lotzuführeinrichtungen für laserunterstützte Lötverfahren oder aktive Einsatzelemente zur Bildverarbeitung und optischen Prüfung. Die vorliegende Erfindung soll sich jedoch nicht auf die vorgenannten konkreten Bearbeitungseinheiten beschränken. Selbstverständlich sind auch andere Bearbeitungseinheiten denkbar.

In einer bevorzugten Weiterbildung weist das Anbringungsmittel mehrere Bohrungen zur Aufnahme von Befestigungsschrauben und präzise Index/Stifteinrichtungen auf.

Diese Ausgestaltung des Anbringungsmittels ist besonders einfach und damit kostengünstig. Die Bearbeitungseinheit wird demnach über Befestigungsschrauben, die die genannten Bohrungen durchgreifen, befestigt.

Selbstverständlich sind auch andere Typen von Anbringungsmitteln denkbar. Auf jeden Fall ist das Anbringungsmittel für alle Anbindungsflächen des Wandelements und des Deckelements gleich, d.h. standardisiert, ausgebildet, so dass die entsprechend an das Anbringungsmittel angepasste Bearbeitungseinheit an jeder der Anbindungsflächen des Wandelements und des Deckelements angebracht bzw. getauscht werden kann.

Das Wandelement in Form von mehreren vier Wandteilen mit jeweils einer Anbindungsfläche bereitgestellt. Vorzugsweise werden die Wandteile an einem Trägerrahmen angebracht. Besonders vorteilhaft ist es, wenn die Wandteile von Streben des Trägerrahmens gebildet werden. In diesem Fall entstehen rechteckige Öffnungen in den Prozessraum.

Der Vorteil dieser Maßnahmen besteht darin, dass eine einfache, kostengünstige Konstruktion erreicht wird, die sehr flexibel umgestaltbar ist.

Die der Erfindung zugrunde liegende Aufgabe wird auch von einer Bearbeitungsstation gelöst, die eine Zentralkammer-Vorrichtung gemäss der vorliegenden Erfindung aufweist.

In einer bevorzugten Weiterbildung weist die Bearbeitungsstation eine Fördereinrichtung auf, die einen Werkstückträger in und aus der Bearbeitungsstation transportiert, und eine Hub- und Positioniereinheit, die dazu ausgelegt ist, den Werkstückträger in den Prozessraum der Zentralkammer-Vorrichtung zu transportieren. Vorzugsweise dient die Hub- und Positioniereinheit auch dazu, das Werkstück innerhalb des Prozessraumes auch in Kombination mit anderen Komponenten (z.B. Dreheinheit) zu handhaben, beispielsweise zu drehen oder zu schwenken.

Das heißt mit anderen Worten, dass der Werkstückträger mit dem darauf liegenden Produkt (Werkstück) vorzugsweise von unten in den Prozessraum gehoben wird. Die Hub- und Positioniereinheit hält dabei den Werkstückträger in einer vordefinierten Arbeitsstellung so lange bis die Bearbeitung des Produkts abgeschlossen ist. Anschließend wird der Werkstückträger zurück nach unten in die Ausgangsstellung gebracht und aus der Bearbeitungsstation transportiert. Das Erreichen der Arbeitsstellung wird vorzugsweise über zwei Sicherheitsschalter erfasst, von denen ein Sicherheitsschalter an der Zentralkammer-Vorrichtung bzw. am Schleusenelement und der andere Sicherheitsschalter an der Hub- und Positioniereinheit angebracht ist.

Besonders bevorzugt weist die Bearbeitungsstation eine optische Bearbeitungseinheit, insbesondere eine Lasereinheit auf, um optische Funktionen ausführen zu können. Dazu zählen beispielsweise das Beschriften von Produkten mit Lasern, das Zusammenfügen von Teilen mittels Laser, das Schneiden von Teilen mit Laser, oder beispielsweise das Vermessen von Produkten mit Laser. Allerdings sei an dieser Stelle angemerkt, dass sich die vorliegende Erfindung nicht auf solche lasergestützte Bearbeitungseinheiten beschränkt. Allgemein lässt sich die erfindungsgemäße Zentralkammer-Vorrichtung für alle Funktionen nutzen, und insbesondere für jene Funktionen, die einen abgeschlossenen Prozessraum benötigen.

Die der Erfindung zugrunde liegende Aufgabe wird auch durch ein Baukastensystem zur optischen Bearbeitung von Werkstücken gelöst, das die erfindungsgemäße Zentralkammer-Vorrichtung aufweist, sowie zumindest eine Laserquellen-Baueinheit, zumindest eine Bewegungs-Baueinheit, zumindest eine Medien- und Technologie-Baueinheit, zumindest eine Schleusen- und Mechanikbaueinheit und zumindest eine Werkstück-Zuführ-Baueinheit, wobei die Baueinheiten jeweils eine Anflansch-Fläche aufweisen, die an einer Anbindungsfläche der Zentralkammer-Vorrichtung über das Anbringungsmittel anbringbar sind.

Mit Hilfe dieses Baukastensystems lassen sich mit standardisierten Baueinheiten die unterschiedlichsten Bearbeitungsstationen aufbauen. Das führt nicht nur zu deutlichen Kostenersparnissen bei der Gestaltung neuer Bearbeitungsstationen, sondern macht insbesondere auch die Umrüstung bestehender Bearbeitungsstationen durch Austausch einzelner Baueinheiten sehr einfach. Der diesem Baukastensystem zugrunde liegende Gedanke besteht folglich darin, eine zentrale Baueinheit, nämlich die Zentralkammer-Vorrichtung, vorzusehen, die über Anbindungsflächen verfügt, an die die einzelnen Baueinheiten anbringbar sind. Hierfür sind alle Baueinheiten des Baukastensystems mit entsprechend angepassten Anflanschflächen ausgestattet, so dass die Baueinheiten grundsätzlich an jeder Anbindungsfläche der Zentralkammer-Vorrichtung angebracht werden können.

Weitere Vorteile und Ausgestaltungen der Erfindung ergeben sich aus der Beschreibung und der beiliegenden Zeichnung.

Die Erfindung wird nun anhand eines Ausführungsbeispiels mit Bezug auf die Zeichnung näher erläutert. Es zeigen:
- Fig. 1: eine schematische Darstellung einer Bearbeitungsstation;
- Fig. 2: eine perspektivische schematische Darstellung einer Zentralkammer-Vorrichtung;
- Fig. 3: eine schematische Seitenansicht einer Zentralkammer-Vorrichtung;
- Fig. 4: eine schematische Darstellung einer Zentralkammer-Vorrichtung mit einer Bearbeitungseinheit;
- Fig. 5A und: 5B eine Zentralkammer-Vorrichtung mit einer Hub- und Positioniereinheit in zwei unterschiedlichen Stellungen;
- Fig. 6: eine schematische Ansicht einer Zentralkammer-Vorrichtung in einer gegenüber der in Fig. 2 gezeigten geänderten Form,
- Fig. 7a-c: schematische Darstellungen der an eine Zentralkammer-Vorrichtung anbringbaren Elemente (Baukastensystem); und
- Fig. 8a-i: Darstellungen zur Erläuterung des schrittweisen Aufbaus einer Bearbeitungsstation mit einer Zentralkammer-Vorrichtung.

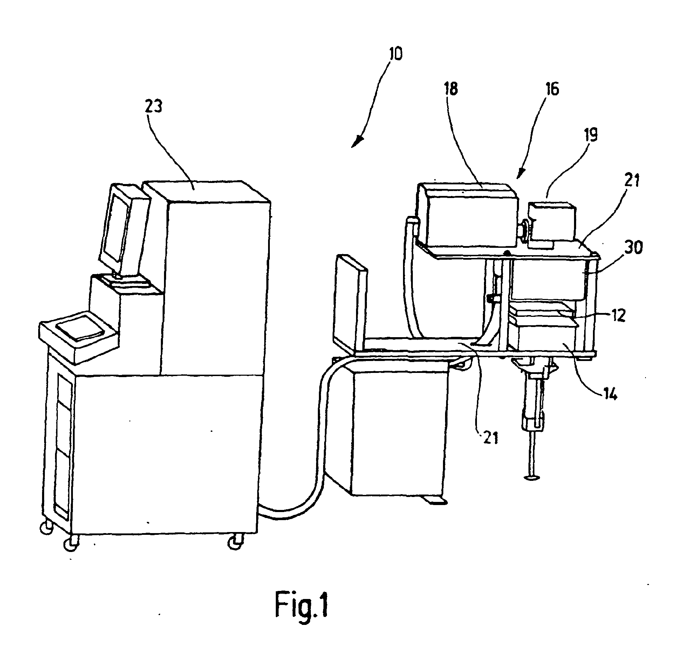

In Fig. 1 ist eine Bearbeitungsstation schematisch dargestellt und mit dem Bezugszeichen 10 gekennzeichnet. Die Bearbeitungsstation 10 ist Teil einer - nicht dargestellten - Bearbeitungsanlage, die eine Vielzahl von solchen Bearbeitungsstationen zur Ausführung unterschiedlichster Funktionen, d.h. Bearbeitungsschritten an einem zu bearbeitenden Produkt, umfasst. Da der Aufbau einer solchen Bearbeitungsanlage allgemein bekannt ist, beispielsweise aus der eingangs erwähnten Druckschrift DE 197 41 671 A1, soll darauf nicht weiter eingegangen werden.

Zum Transport eines Werkstückträgers, der in Fig. 1 mit dem Bezugszeichen 12 gekennzeichnet ist, ist eine Transporteinheit 14 vorgesehen. Diese Transporteinheit 14 besteht im einfachsten Fall aus zwei parallel zueinander verlaufenden Bändern, auf denen der Werkstückträger 12 aufliegt. Die einzelnen Bearbeitungsstationen sind innerhalb der Bearbeitungsanlage der Reihe nach angeordnet, so dass die Transporteinheiten 14 hintereinander in einer Linie liegen, so dass eine Transportstrasse ausgebildet wird. Neben der in Fig. 1 gezeigten Transporteinheit 14 zum Transport in eine Richtung gibt es auch Bearbeitungsstationen mit einer Transporteinheit, die zwei gegenläufige Transportuntereinheiten aufweist.

Zur Bearbeitung des auf dem Werkstückträger liegenden Produkts ist eine Bearbeitungseinheit 16 vorgesehen, die im vorliegenden Ausführungsbeispiel ein Lasermodul 18 und ein Laseroptik-Element 19 umfasst. Das Lasermodul 18 wird mit Hilfe des Laseroptik-Elements 19 an einer Zentralkammer 30 angebracht, wobei auf den genauen Aufbau dieser Zentralkammer später noch eingegangen wird. Das Lasermodul 18 kann gegebenenfalls auf einer Tischplatte 21 abgestützt werden.

Die Bearbeitungsstation 10 umfasst eine Steuereinrichtung, die mit dem Bezugszeichen 23 gekennzeichnet ist. Diese Steuereinrichtung 23 weist eine Rechnereinheit auf, sowie alle anderen notwendigen Einrichtungen, die zum Betrieb der Bearbeitungseinheit 16 erforderlich sind.

Im Sinne der vorliegenden Erfindung bilden die Steuereinrichtung 23 und die Bearbeitungseinheit 16 ein sogenanntes Prozessmodul, das einen in sich autarken Betrieb der Bearbeitungseinheit ermöglicht.

Wie bereits erwähnt, kann eine Bearbeitungsstation 10 mehrere Prozessmodule umfassen, die unterschiedliche Funktionen ausführen können. Im vorliegenden in Fig. 1 gezeigten Ausführungsbeispiel ist jedoch nur ein Prozessmodul dargestellt.

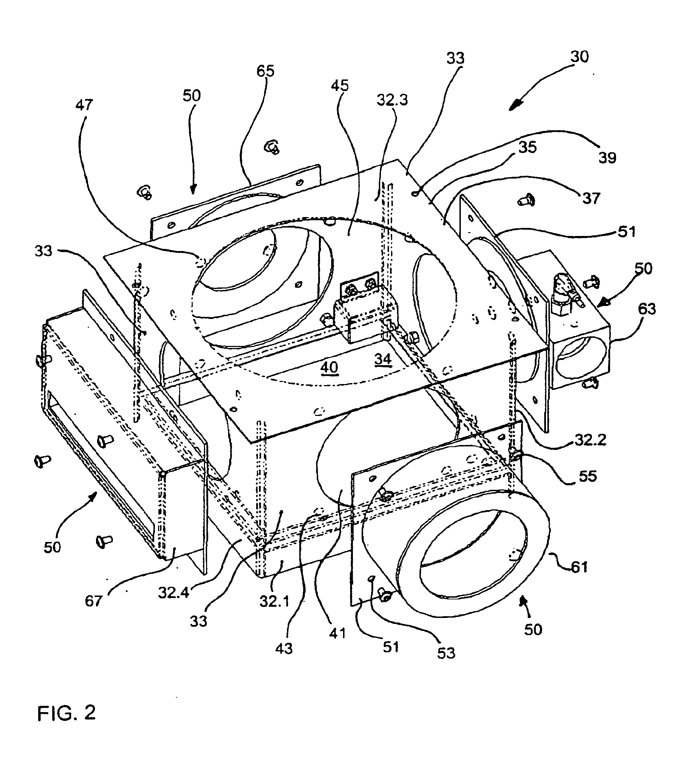

Nachfolgend soll nun auf den Aufbau der Zentralkammer 30 unter Bezugnahme auf die Figuren 2 - 4 eingegangen werden.

Die Zentralkammer 30 setzt sich aus vier Wandelementen 32.1 - 32.4 zusammen, die in einem Winkel von 90° zueinander angeordnet sind und jeweils eine Anbindungsfläche 33 aufweisen. Die Wandelemente 32.1 - 32.4 sind identisch zueinander ausgebildet und begrenzen somit - in Draufsicht - eine quadratische Grundfläche 34. Auf den vier Wandelementen 32 liegt ein Deckelement 35, dessen Fläche - im vorliegenden Fall - größer als die Grundfläche 34 gewählt ist und ebenfalls eine Anbindungsfläche 33 aufweist. Die zu der Grundfläche 34 zentrierte Lage des Deckelements 35 sorgt dafür, dass das Deckelement 35 über die Wandelemente 32 hinausragt. In diesem Randbereich, der in Fig. 2 mit dem Bezugszeichen 37 gekennzeichnet ist, sind verschiedene Bohrungen 39 vorgesehen, um eine Befestigung an der Platte 21 über Schrauben zu ermöglichen. Selbstverständlich ist es denkbar, die Fläche des Deckelelements so zu wählen, dass kein überstehender Randbereich entsteht.

Die vier Wandelemente 32 und das Deckelement 35 begrenzen einen Prozessraum 40, dessen Grundfläche der Grundfläche 34 entspricht. Die Größe des Prozessraums 40 wird abhängig von der Größe des zu bearbeitenden Produkts ausgewählt.

Die Zentralkammer 30 ist nach unten, d.h. an der dem Deckelement 35 gegenüberliegenden Seite, offen, um ein Einbringen des Produkts von unten in den Prozessraum 40 zu ermöglichen.

Jede Anbindungsfläche 33 weist eine vorzugsweise kreisförmige Öffnung 41 auf, die in den Prozessraum 40 mündet. Selbstverständlich kann die Form der Öffnung variieren. Des weiteren sind verteilt um die Öffnung 41 an der Anbindungsfläche 33 Bohrungen 43 vorgesehen. Im vorliegenden Ausführungsbeispiel sind insgesamt vier Bohrungen 43 ausgebildet, die gleichmäßig beabstandet zueinander liegen. Selbstverständlich ist die Anzahl und die Anordnung der Bohrungen 43 nicht auf diese Lösung beschränkt.

Alle Wandelemente 32.1 - 32.4 sind identisch zueinander ausgebildet, so dass folglich jede Anbindungsfläche 33 über die erwähnte Öffnung 41 und die erwähnten Bohrungen 43 verfügt. Ferner ist auch die Anbindungsfläche des Deckelements 35 mit einer Öffnung 45 versehen, die in den Prozessraum 40 mündet. Diese vorzugsweise kreisförmige Öffnung 45 entspricht hinsichtlich des Durchmessers den Öffnungen 41. Auch die um die Öffnung 45 gruppierten Bohrungen 47 entsprechen hinsichtlich Anzahl und Anordnung den erwähnten Bohrungen 43.

An die Anbindungsfläche 33 jedes Wandelements 32.1 - 32.4 ist eine Bearbeitungseinheit 50 anbringbar, wobei jede Bearbeitungseinheit 50 eine Befestigungsplatte 51 bzw. einen Befestigungsrand 51 aufweist, der ebenfalls mit Bohrungen 53 versehen ist, deren Anordnung zueinander der Anordnung der Bohrungen 43 bzw. 47 entspricht. Das heißt, dass die Bohrungen 53 und 43 fluchten, wenn die Befestigungsplatte 51 auf einer Anbindungsfläche 33 aufliegt.

Die Befestigung der Bearbeitungseinheit 50 an einer Anbindungsfläche 33 eines Wandelements 32 erfolgt über Schrauben 55, die in die Bohrungen 53 und 43 gesteckt werden. In Fig. 2 sind beispielhaft vier unterschiedliche Bearbeitungseinheiten 50 dargestellt, nämlich ein Laseroptik-Element 61, ein Abluftelement 63, ein Abdeckelement 65 und ein Zuluftelement 67. Neben diesen beispielhaft aufgezählten Bearbeitungseinheiten 50 sind selbstverständlich auch andere Bearbeitungseinheiten abhängig von der gewünschten Funktion an der Zentralkammer 30 anbringbar, wobei sie in Form von Anschraub- bzw. Einsatzelementen ausgeführt sein können.

Den Bearbeitungseinheiten 50 ist jedoch gemeinsam, dass sie über die erwähnte Befestigungsplatte 51 (bzw. Befestigungsrand 51) verfügen, der mit Bohrungen 53 versehen ist, die in aufgesetztem Zustand mit den Bohrungen 43 der Anbindungsfläche 33 eines Wandelements 32 fluchten.

Diese Befestigung über Schrauben stellt die einfachste Möglichkeit der Anbringung von Bearbeitungseinheiten 50 dar. Selbstverständlich beschränkt sich die Erfindung nicht auf diese konkrete Befestigungsform. Vielmehr sind auch andere Anbringungsmöglichkeiten denkbar. Wichtig ist lediglich, dass die Befestigung an allen vier Anbindungsflächen gleich ist, so dass die Bearbeitungseinheiten 50 an jeder beliebigen Anbindungsfläche 33 angebracht werden können. Gerade diese Struktur ermöglicht einen flexiblen Einsatz der Zentralkammer 30, indem sie an die unterschiedlichsten Bedürfnisse durch Anbringen von Bearbeitungseinheiten anpassbar ist.

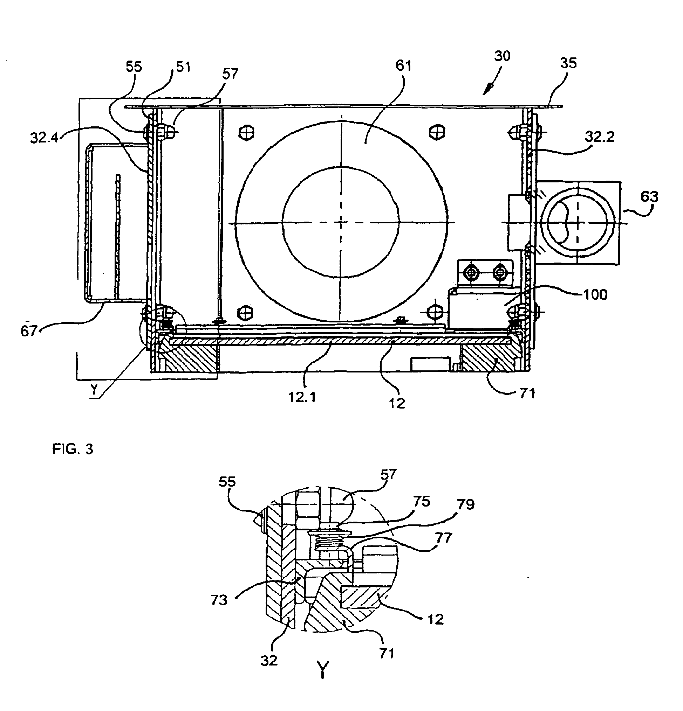

In Fig. 3 ist die Zentralkammer 30 in einer Seitenansicht mit Blick auf das Laseroptik-Element 61 dargestellt. Zur Erleichterung sind gleiche Teile mit den gleichen Bezugszeichen bezeichnet, so dass darauf nicht weiter eingegangen werden muss. Deutlich zu erkennen ist in Fig. 3, dass die Befestigungsplatten 51 der Bearbeitungseinheiten 50 mit Schrauben 55 und Muttern 57 befestigt sind.

Wie bereits erwähnt, ist die Zentralkammer 30 nach unten hin offen ausgebildet. In diese Schleusenöffnung wird der Werkstückträger 12 so weit eingefahren, bis die Arbeitsstellung erreicht wird. In Fig. 3 ist der Werkstückträger 12 in dieser Arbeitsstellung dargestellt. Der Werkstückträger 12 wird gehalten von einem umlaufenden Rahmen 71, der mit einer Hub- und Positioniereinrichtung über Indexierstifte verbunden ist. Es wird über die Trägerplatte 12.1 des Werkstückträgers 12 die Kraft übertragen. Dies wird später noch genauer erläutert.

An den dem Prozessraum zugewandten Seiten der Wandelemente 32 sind Winkelträgerelemente 73 angebracht, die einen vertikal verlaufenden Stift 75 stützen. Dieser Stift 75 führt eine Abdichtleiste 77, die im vorliegenden Ausführungsbeispiel - im Querschnitt - L-förmig ausgebildet ist. Diese Abdichtleiste 77 wird von einer auf dem Stift sitzenden Feder 79 senkrecht nach unten gedrückt.

In der Arbeitsstellung stößt das untere Ende der Abdichtleiste 77 an dem Rahmen 71 an und wird über die Feder 79 auf diesen gedrückt. Dadurch, dass die Abdichtleiste sich über die gesamte Breite jedes Wandelements 32 erstreckt, wird durch das Zusammenwirken von Abdichtleiste 77 und Rahmen 71 eine zumindest lichtdichte Abdichtung des Prozessraums 40 nach unten erzielt.

Im Bereich eines Datenträgers auf dem Werkstückträger 12 ist keine Abdichtleiste vorgesehen. Dieser Bereich wird über ein Gehäuse 100 abgedichtet.

In einer nicht gezeigten Ausführungsvariante sind Winkelträgerelemente 73, Stift 75, Abdichtleiste 77 und Feder 78 an einem Rahmen angebracht, der in die Schleusenöffnung einsteckbar ist. Diese Einheit bildet dann ein Schleusenelement.

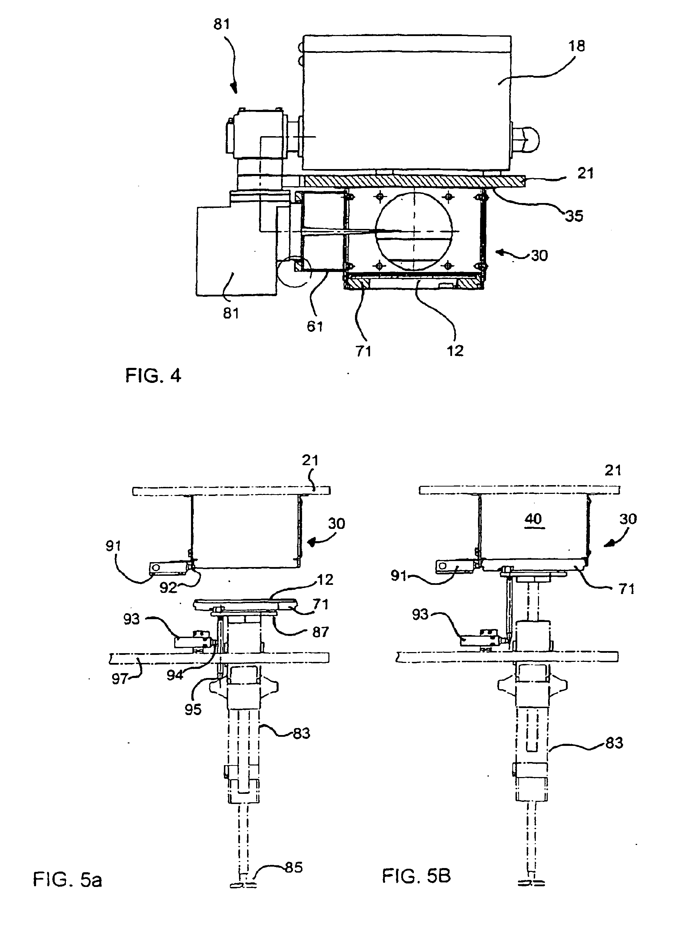

In Fig. 4 ist die Zentralkammer 30 in einer Seitenansicht dargestellt, wobei sie an der Platte 21 befestigt ist. Diese Befestigung erfolgt durch Anschrauben des Deckelements 35 an der Platte 21. Die Zentralkammer 30 kann selbstverständlich auch über alternative Befestigungsmöglichkeiten (z.B. mit Platten in den Eckpunkten, an Säulen) befestigt werden.

Auf der Platte ist das Lasermodul 18 angeordnet, das Laserlicht erzeugt. Dieses Laserlicht wird über Ablenkeinheiten 81 durch das Laseroptik-Element 61 in den Prozessraum 40 geführt. Soll das im Prozessraum 40 liegende Produkt per Laser beschriftet werden, enthält die Ablenkeinheit 81 die erforderlichen Elemente, um den Laserstrahl über das Produkt zu führen. Selbstverständlich gibt es auch Einzelfälle mit nur einer Ablenkeinheit 81. Es ist zudem möglich, den Laserstrahl von mehreren Seiten gleichzeitig in den Prozessraum 40 zu führen. Hierzu werden mehrere Ablenkeinheiten benötigt.

Mit Bezug auf die Fig. 5A und 5B soll die bereits erwähnte Hub- und Positioniereinheit näher erläutert werden. Sie ist in den beiden Figuren 5A und 5B mit dem Bezugszeichen 83 gekennzeichnet. Die Hub- und Positioniereinheit ist an einer Tischplatte 97 angebracht und trägt an einem Ende 87 den Rahmen 71, der den Werkstückträger 12 hält.

In Fig. 5A ist die Hub- und Positioniereinheit 83 in einer ersten Endposition (Grundstellung) und in Fig. 5B in einer zweiten Endposition (Arbeitsstellung) gezeigt. Das Bewegen des Werkstückträgers 12 von der einen in die andere Position erfolgt hydraulisch, elektrisch oder pneumatisch. In der in Fig. 5A gezeigten Grundstellung liegt der Werkstückträger 12 auf den Transportbändern der Transporteinheit 14. Durch Anheben der Trägerplatte 12.1 und des Rahmens 71 mit der Hub- und Positoniereinheit 83 wird der Werkstückträger 12 von den Transportriemen abgehoben und in die Arbeitsposition gebracht. Das Erfassen der Arbeitsposition erfolgt über zwei Sicherheitsschalter, die mit den Bezugszeichen 91 und 93 gekennzeichnet sind.

Der Sicherheitsschalter 91 ist an einer Anbindungsfläche 33 der Zentralkammer 30 bzw. an einem Schleusenelement angebracht und verfügt über einen Kontaktstift 92, der von dem Rahmen 71 in der Arbeitsposition betätigt wird.

Der zweite Sicherheitsschalter 93 ist an der Tischplatte bzw. einem Rahmenelement 97 der Bearbeitungsstation angebracht und verfügt ebenfalls über einen Kontaktstift 94, der an einer Schaltfahne 95 anliegt. Diese Schaltfahne 95 erstreckt sich ausgehend von der Trägerplatte 12.1 senkrecht nach unten und weist im unteren Bereich einen konischen Abschnitt auf. Beim Anheben des Werkstückträgers 12 bewegt sich die Schaltfahne 95 relativ zu dem Kontaktstift 94, wobei der Kontaktstift 94 stets an die Schaltfahne 95 gedrückt wird. Der konische Abschnitt ist so ausgelegt, dass dieser den Kontaktstift 94 erreicht, wenn der Rahmen 71 seine Endposition in der Zentralkammer 30 erreicht. Der Kontaktstift 94 verändert dadurch seine Position und öffnet bzw. schließt einen entsprechenden Kontakt.

Sobald beide Sicherheitsschalter 91 und 93 die Endposition des Rahmens 71 erfasst haben, kann mit der Bearbeitung des auf dem Werkstückträger liegenden Produkts im Prozessraum 40 begonnen werden.

In dem zuvor erläuterten Ausführungsbeispiel sind die Wandelemente 32.1-32.4 jeweils als einstückiges flächiges Bauelement, bspw. in Form einer Metalltafel, gezeigt. Selbstverständlich ist die vorliegende Erfindung nicht darauf beschränkt. Vielmehr können ein oder mehrere Wandelemente auch als Rahmen ausgebildet sein, der sich aus zumindest vier miteinander verbundenen Rahmenteilen zusammensetzt. Jedes der Rahmenteile besitzt eine nach außen gerichtete Fläche, wobei diese Flächen insgesamt die jeweilige Anbindungsfläche eines Wandelements bilden und die in den Prozessraum mündende Öffnung umgeben. Eine weitere Ausführungsvariante besteht darin, einen solchen Rahmen aufzubauen und an diesem flächige Wandelemente zu befestigen, so dass sich der in Fig. 2 gezeigte Aufbau ergibt. In diesem Fall müssen die Wandelemente nicht mehr direkt miteinander verbunden werden.

Es zeigt sich somit, dass mit Hilfe der Zentralkammer 30 unterschiedliche Prozessmodule aufgebaut werden können. Dies wird insbesondere dadurch erreicht, dass die Anbindungsfläche der Wandelemente und des Deckelements über gleiche Anbringungsmittel verfügen, so dass Bearbeitungseinheiten beliebig daran angebracht werden können. Darüber hinaus sei an dieser Stelle nochmals angemerkt, dass sich die erfindungsgemäße Zentralkammer nicht nur für optische Bearbeitungen einsetzen lässt, sondern grundsätzlich für jede Bearbeitung eingesetzt werden kann, die einen geschlossenen Prozessraum (Bearbeitungsraum) benötigt.

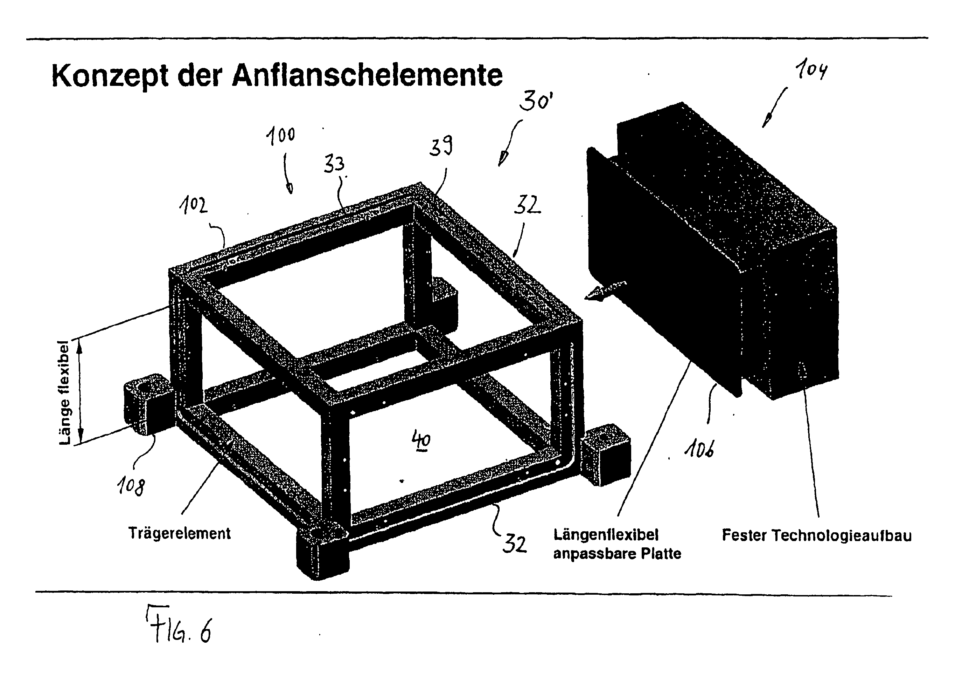

In Fig. 6 ist eine weitere Ausgestaltung der Zentralkammer aufgezeigt. Im Unterschied zu der Zentralkammer 30 der Figur 2 besteht die gezeigte Zentralkammer 30' aus einem Rahmengestell 100, das einzelne Rahmenelemente 102 aufweist, die zu einem quaderförmigen Körper zusammengesetzt sind. Die Rahmenelemente 102 bilden die zuvor erwähnten Wandelemente 32 und definieren Anbindungsflächen 33. Diese Anbindungsflächen 33 sind mit Bohrungen 39 versehen, an die die einzelnen Baueinheiten 104 des Baukastensystems anbringbar sind. Jede Baueinheit 104 weist hierfür eine Anflanschfläche 106 in Form einer rechteckigen Platte auf, die an die Anbindungsfläche eines Wandelements 32 angeschraubt werden kann. Das Rahmengestell 100 weist zur Befestigung an einem Rahmen einer Bearbeitungsstation Befestigungselemente 108 in Form von Laschen auf, die selbst jeweils Bohrung besitzen.

In Fig. 6 sind die Anbindungsflächen 31 der Wandelemente 32 hinsichtlich ihrer Form und Größe unterschiedlich zu der Anbindungsfläche des Deckelements und der Grundfläche. Es versteht sich jedoch, dass das Rahmengestell 100 selbstverständlich auch mit identischen Anbindungsflächen aufgebaut sein kann.

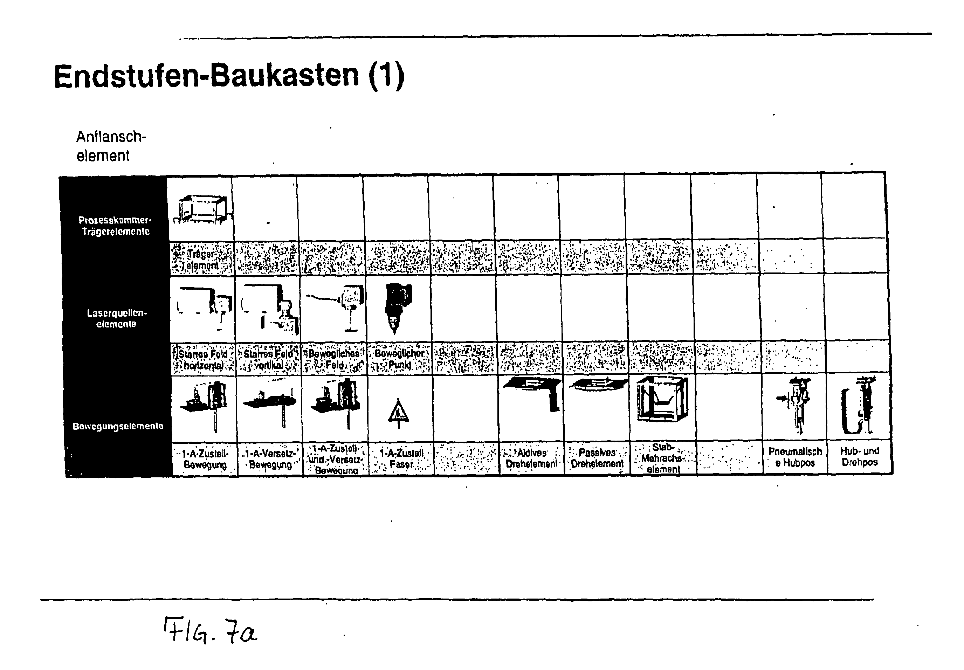

In den Fig. 7a-c sind die einzelnen Baueinheiten des erfindungsgemäßen Baukastensystems dargestellt. Basis dieses Baukastensystems bildet die Zentralkammer 30, 30', wie sie in Fig. 2 und 6 gezeigt ist (dort als Prozesskammer-Trägerelement bezeichnet). An diese Zentralkammer 30 lassen sich z.B. Laserquellenelemente anbringen, die zur Laserbearbeitung eines Werkstücks benötigt werden.

Eine weitere Gruppe des Baukastensystems ist in den Bewegungselementen zu sehen, die eine Bewegung der Laserquellenelemente oder des Werkstücks ermöglichen.

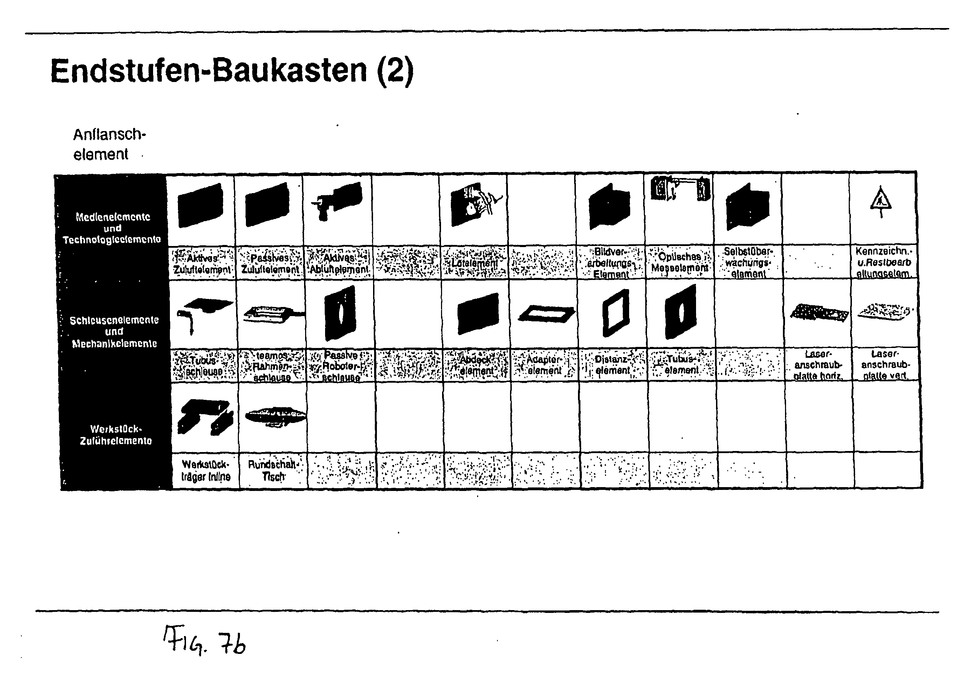

In Fig. 7b sind weitere Gruppen des Baukastensystems dargestellt, nämlich beispielsweise sogenannte Medienelemente und Technologieelemente. Hierzu gehören aktive Zuluftelemente, passive Zuluftelemente oder aktive Abluftelemente, die - wie der Name schon sagt - für eine Belüftung des Prozessraums sorgen. Weitere Elemente dieser Gruppe sind beispielsweise ein Lötelement, Bildverarbeitungselemente, optische Messelemente, Selbstüberwachungselemente etc..

Eine weitere Gruppe bilden die Schleusenelemente und Mechanikelemente, die unter anderem dafür vorgesehen sind, Werkstücke in den Prozessraum einzuschleusen.

Schließlich besteht eine weitere Gruppe des Baukastensystems aus sogenannten Werkstück-Zuführelementen, die die Werkstücke der Bearbeitung zuführen.

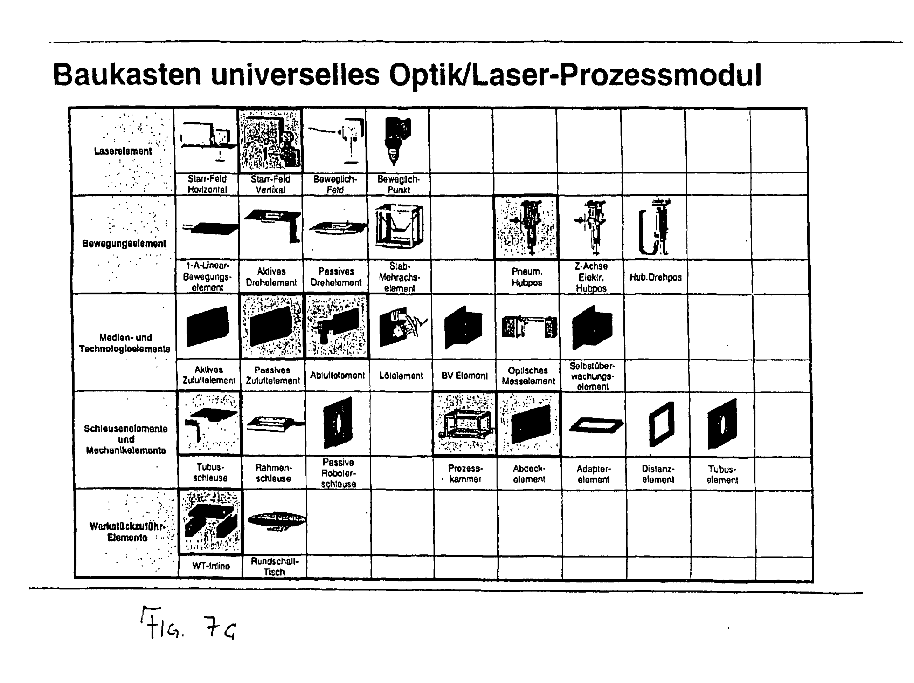

In Fig. 7c sind jene Baueinheiten gekennzeichnet, die zum Aufbau eines Optik-Laser-Prozessmoduls erforderlich sind, wobei auch hier die Zentralkammer (Prozesskammer) das zentrale Element des Prozessmoduls bildet.

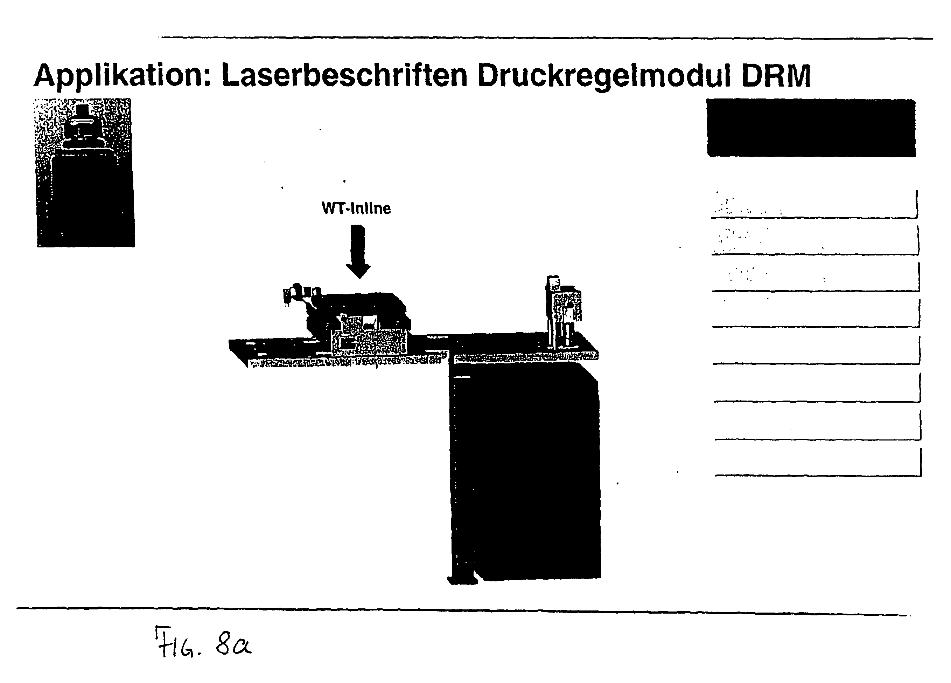

In den Fig. 8a-i sind die einzelnen Schritte zum Aufbau eines Prozessmoduls dargestellt, mit dessen Hilfe ein Werkstück laserbeschriftet werden kann. Die einzelnen Schritte sind selbsterklärend, so dass eine weitere Beschreibung nicht erforderlich ist.

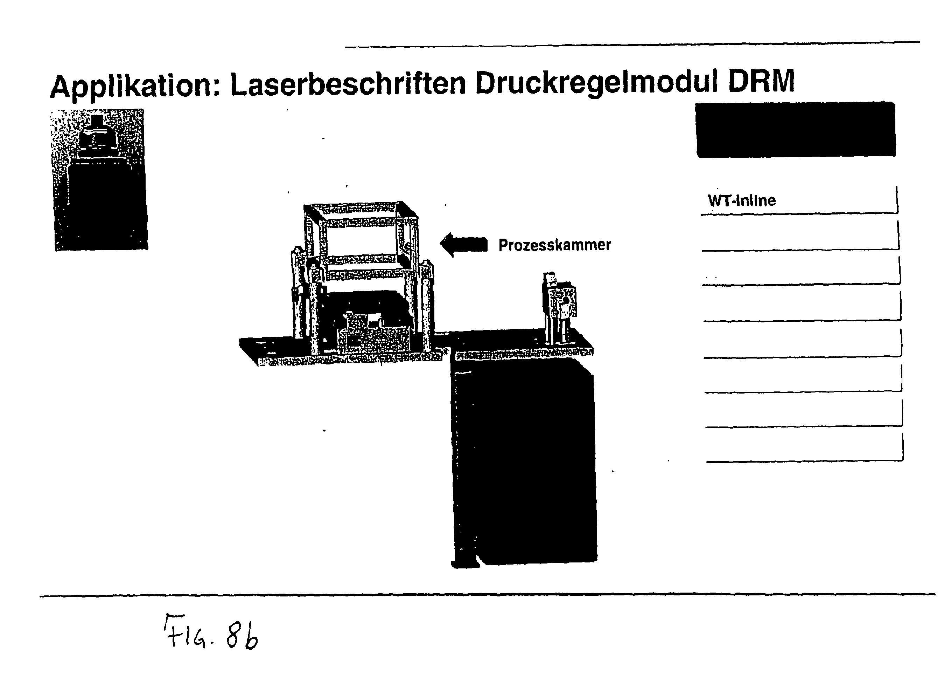

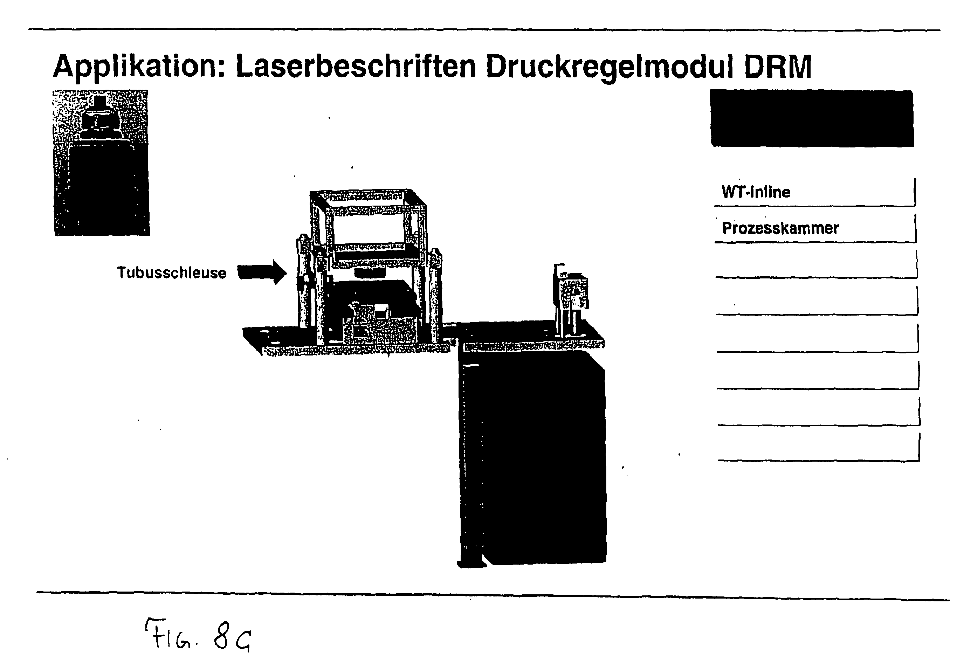

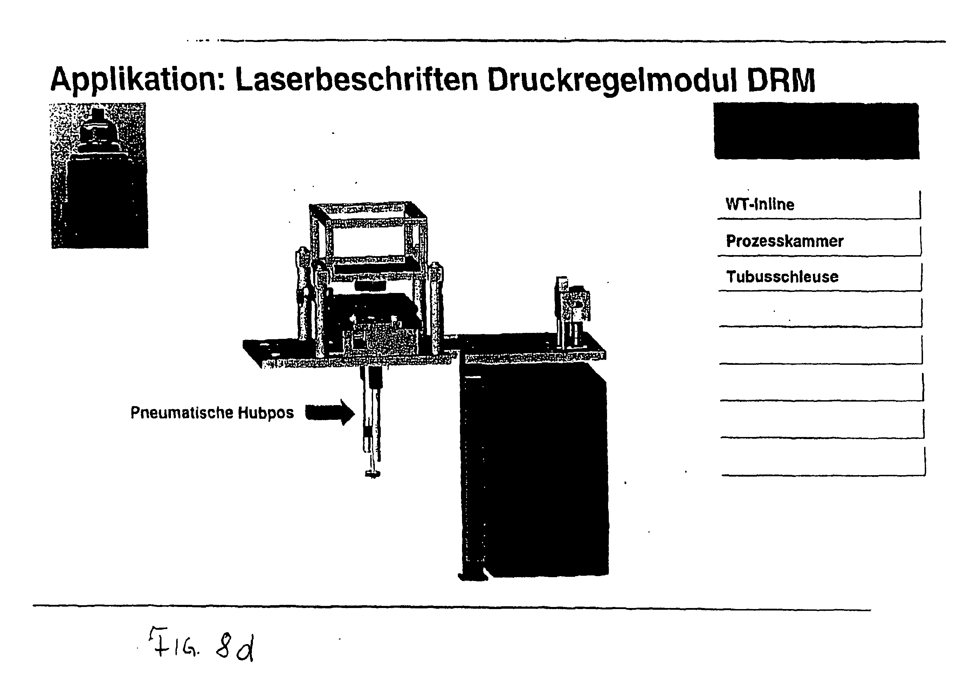

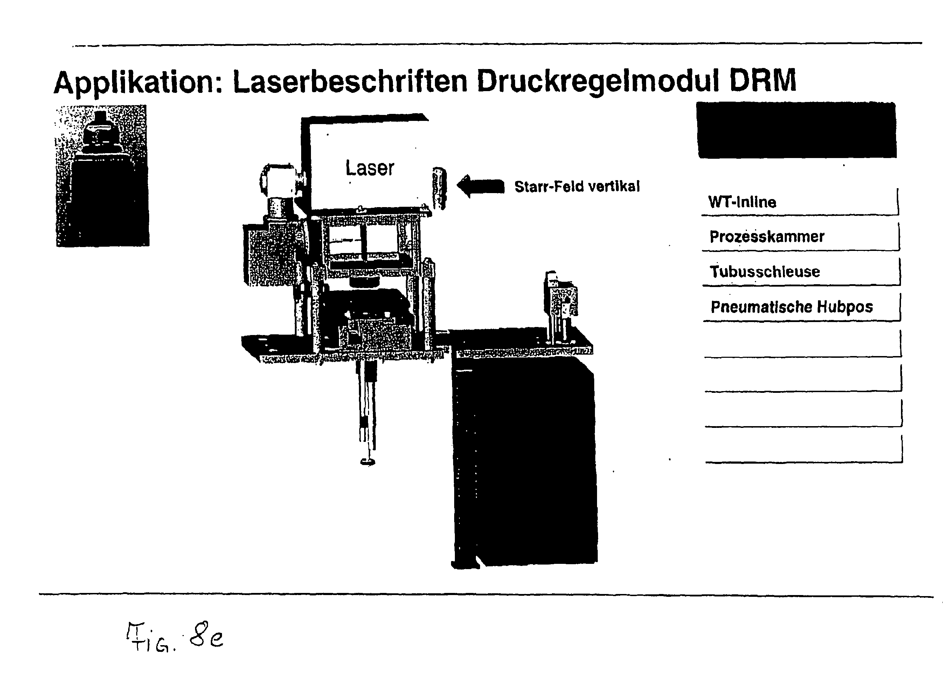

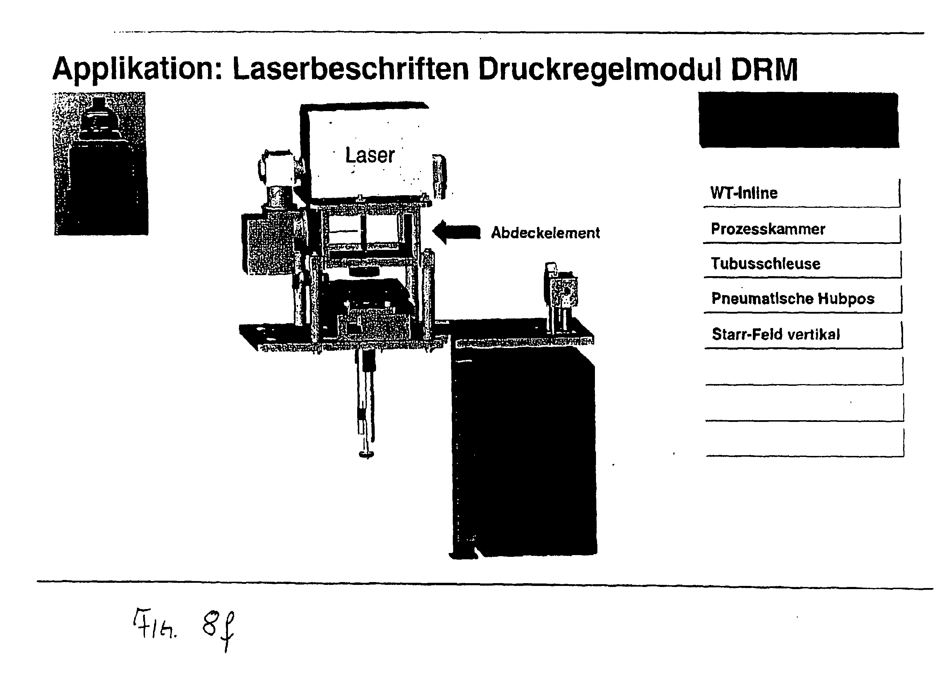

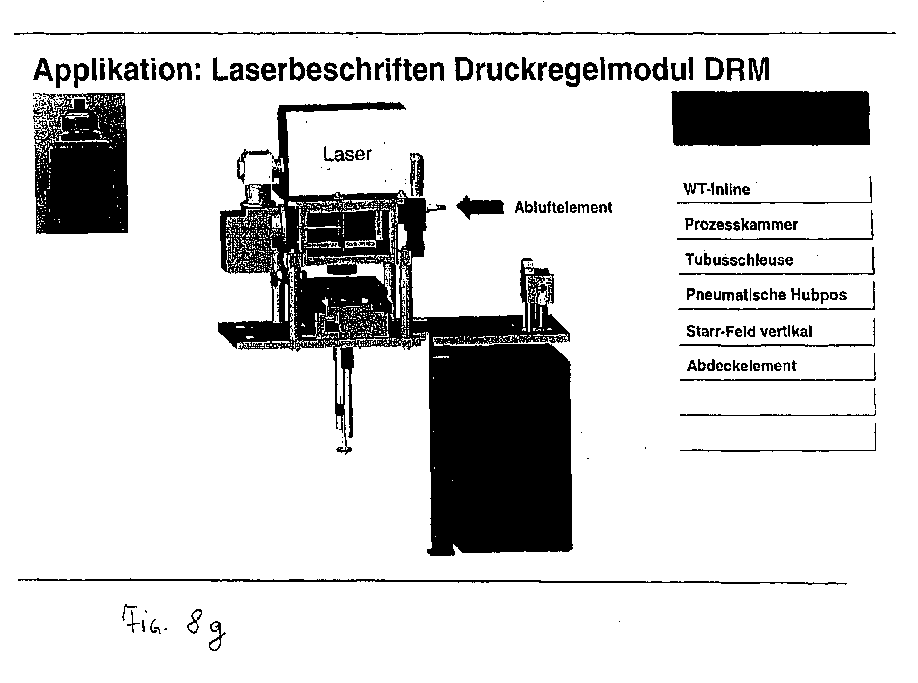

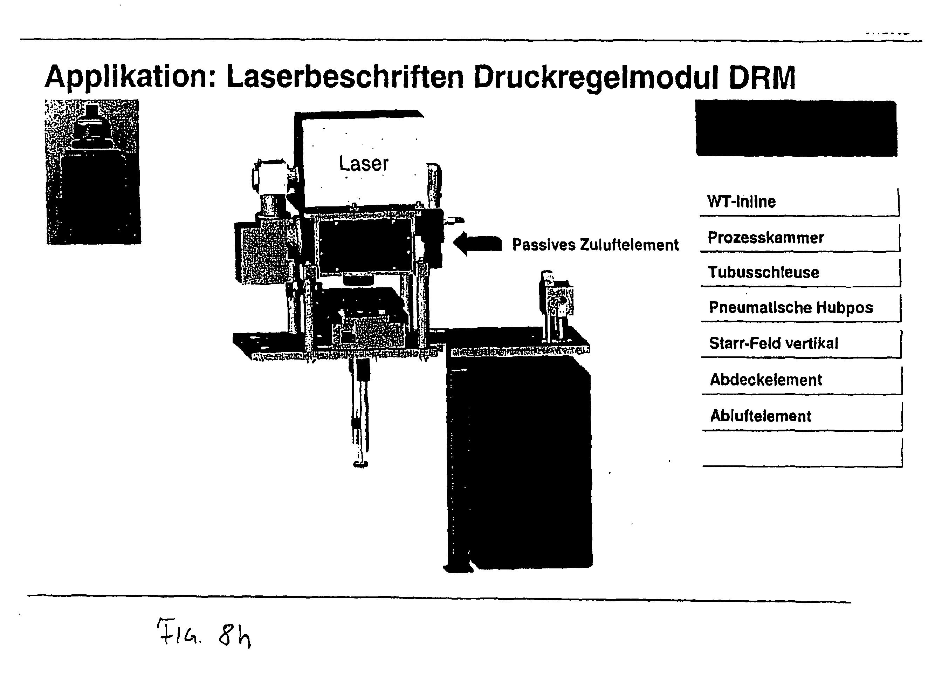

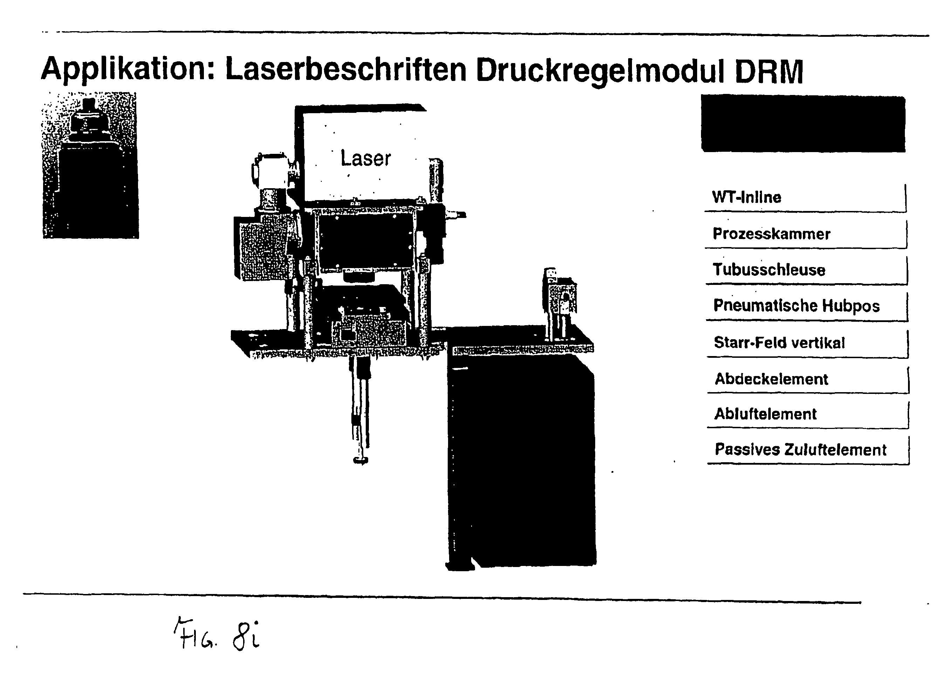

Aus den Fig. 7 und 8 wird erkennbar, dass mit Hilfe der Zentralkammer 30, 30' als zentrales Element und den daran angepassten Baukasten-Elementen ein Baukastensystem geschaffen wird, das eine sehr flexible und ökonomische Gestaltung von Bearbeitungsstationen ermöglicht. Die einzelnen Baukasten-Elemente können immer wieder verwendet werden, ohne selbst umgebaut oder angepasst zu werden.

## Patentansprüche

1. Zentralkammer-Vorrichtung für Fertigungs- und Prüfvorgänge zum Aufbau von universellen Prozessmodulen, insbesondere Laser-/Optik-Prozessmodulen oder von laserunterstützten Prozessmodulen, mit zumindest einem zumindest eine Anbindungsfläche (33) aufweisenden Wandelement (32) und einem Deckelement (35), die miteinander verbunden sind und einen ein zu bearbeitendes Werkstück aufnehmenden Prozessraum (40) umgeben, und wobei dem Wandelement (32) oder dem Deckelement (35) eine Bearbeitungseinheit (16) zuordenbar ist, **dadurch gekennzeichnet, dass**
jede Anbindungsfläche (33) eine Öffnung (41) in den Prozessraum (40) und ein Mittel zum Anbringen (43, 55) einer Bearbeitungseinheit (16) aufweist,
das Wandelement (32) vier, insbesondere gleich große Anbindungsflächen (33) aufweist, die so angeordnet sind, dass sie zusammen mit dem Deckelement (35) einen quaderförmigen Prozessraum (40) umgeben,
auch das Deckelement (35) eine Anbindungsfläche (33) mit einer Öffnung (45) in den Prozessraum (40) und ein Mittel zum Anbringen (47, 55) einer Bearbeitungseinheit (16) aufweist,
die Mittel zum Anbringen (43, 55) aller Anbindungsflächen (33) standardisiert ausgebildet sind, und
eine Schleusenöffnung an der dem Deckelement (35) gegenüber liegenden Seite vorgesehen ist, durch die das Werkstück in den Prozessraum (40) eingebracht werden kann, wobei in die Schleusenöffnung ein Schleusenelement eingesetzt ist, an dem ein Abdichtelement (77) federnd angebracht ist.

2. Zentralkammer-Vorrichtung nach Anspruch 1, **dadurch gekennzeichnet, dass** das Wandelement (32) aus vier miteinander verbundenen Wandteilen besteht, wobei jedes Wandteil eine Anbindungsfläche (33) aufweist.

3. Zentralkammer-Vorrichtung nach Anspruch 2, **dadurch gekennzeichnet, dass** ein Trägerrahmen vorgesehen ist, an dem die Wandteile (32.1-32.4) und/oder das Deckelement (35) angebracht sind.

4. Zentralkammer-Vorrichtung nach Anspruch 2, **dadurch gekennzeichnet, dass** ein Trägerrahmen vorgesehen ist, dessen einzelnen Trägerelemente das Wandelement und die Anbindungsflächen bilden.

5. Zentralkammer-Vorrichtung nach einem der vorhergehenden Ansprüche, **dadurch gekennzeichnet, dass** das Mittel zum Anbringen (43) mehrere Bohrungen (43) zur Aufnahme von Befestigungsschrauben (55) aufweist.

6. Zentralkammer-Vorrichtung nach einem der vorhergehenden Ansprüche, **dadurch gekennzeichnet, dass** zumindest ein Abdeckelement (65) vorgesehen ist, das an einer Anbindungsfläche (33) eines Wandelements (32.3) über das Mittel zum Anbringen angebracht ist und die Öffnung (41) abdeckt.

7. Bearbeitungsstation mit zumindest einem Prozessmodul zur Ausführung einer vorgegebenen Funktion, insbesondere einer optischen Funktion, **gekennzeichnet durch** eine Zentralkammer-Vorrichtung (30) nach einem der Ansprüche 1 bis 6.

8. Bearbeitungsstation nach Anspruch 7, **gekennzeichnet durch** eine Fördereinrichtung (14), die einen Werkstückträger (12) in und aus der Bearbeitungsstation (10) transportiert, und eine Hub- und Positioniereinheit (83), die dazu ausgelegt ist, den Werkstückträger (12) in den Prozessraum (40) der Zentralkammer-Vorrichtung zu (30) transportieren.

9. Bearbeitungsstation nach Anspruch 7 oder 8, **dadurch gekennzeichnet, dass** ein erster Sicherheitsschalter (91) an der Zentralkammer-Vorrichtung (30) und ein zweiter Sicherheitsschalter (93) an der Hub- und Positioniereinheit (83) angeordnet ist, um die Endposition des Werkstückträgers (12) zu erfassen.

10. Bearbeitungsstation nach einem der Ansprüche 7, 8 oder 9, **dadurch gekennzeichnet, dass** der Werkstückträger (12) in einer Endposition an dem Abdichtelement (77) des Schleusenelements anliegt.

11. Bearbeitungsstation nach einem der Ansprüche 7 bis 10, **gekennzeichnet durch** eine Lasereinheit (18), und einer als Laser-Optikelement (61) ausgebildeten Bearbeitungseinheit (16), die an einer ersten Anbindungsfläche (33) **durch** das Mittel zum Anbringen (43, 51, 55) angebracht ist.

12. Bearbeitungsstation nach Anspruch 11, **dadurch gekennzeichnet, dass** an einer anderen zweiten Anbindungsfläche (33) eine als Zuluftelement (67) ausgebildete Bearbeitungseinheit (16), an einer dritten Anbindungsfläche (33) eine als Abluftelement (63) ausgebildete Bearbeitungseinheit (16) und an einer vierten Anbindungsfläche (33) ein Abdeckelement (65) angebracht ist.

13. Baukastensystem zur optischen Bearbeitung von Werkstücken, **gekennzeichnet durch** eine Zentralkammer-Vorrichtung nach einem der Ansprüche 1 bis 5, zumindest einer Laserquellen-Baueinheit, zumindest einer Bewegungs-Baueinheit, zumindest einer Medien- und Technologie-Baueinheit, zumindest einer Schleusen- und Mechanik-Baueinheit und zumindest einer Werkstück-Zuführ-Baueinheit, wobei die Baueinheiten jeweils eine Anflansch-Fläche aufweisen, die an zumindest einer der Anbindungsflächen der Zentralkammer-Vorrichtung über das Mittel zum Anbringen anbringbar sind.

## Claims

1. Central chamber device for manufacturing and testing processes for configuring general-purpose process modules, particularly laser/optic process modules, or laser-based process modules, comprising at least one wall element (32) having at least one mounting surface (33) and a sealing element (35), which are connected with each other and surround a process room (40) receiving a workpiece to be processed, and wherein a process unit (16) is assignable to the wall element (32) or the sealing element (35), **characterized in that**
each mounting surface (33) comprises an opening (41) into the process room (40) and means for mounting (43, 55) a process unit (16);
the wall element (32) comprises four, particularly equally sized mounting surfaces (33), which are arranged such that they, together with the sealing element (35), surround a process room (40) in form of a rectangular parallelepiped,
also the sealing element (35) comprises a mounting surface (33) having an opening (45) into the process room (40) and means for mounting (mounting means; 47, 55) a process unit (16),
the mounting means (43, 55) of all mounting surfaces (33) are standardized, and
a gate opening is provided at the opposing side of the sealing element (35), through which the workpiece may be introduced into the process room (40), wherein a gate element is inserted into the gate opening, at which a sealing element (77) is mounted resiliently.

2. Central chamber device according to claim 1, **characterized in that** the wall element (32) comprises four interconnected wall parts, wherein each wall part has a mounting surface (33).

3. Central chamber device according to claim 2, **characterized in that** a support frame is provided, on which the wall parts (32.1-32.4) and/or the sealing element (35) are mounted.

4. Central chamber device according to claim 2, **characterized in that** a support frame is provided, the respective support elements of which forming the wall element and the mounting surfaces.

5. Central chamber device according to anyone of the preceding claims, **characterized in that** the means for mounting (43) comprises several holes (43) for receiving fixing screws (55).

6. Central chamber device according to anyone of the preceding claims, **characterized in that** at least one cover element (65) is provided, which is attached at the mounting surface (33) of a wall element (32.3) through the means for mounting and which covers the opening (41).

7. Processing station with at least one process module for carrying out a predetermined function, particularly an optical function, **characterized by** a central chamber device (30) according to anyone of claims 1 to 6.

8. Processing station according to claim 7, **characterized by** a conveying device (14) which transports a workpiece carrier (12) into and out of the processing station (10), and a lifting and positioning unit (83) which is adapted to transport the workpiece carrier (12) into the process room (40) of the central chamber device (30).

9. Processing station according to claim 7 or 8, **characterized in that** a first safety switch (91) is disposed at the central chamber device (30) and a second safety switch (92) is disposed at the lifting and positioning unit (83) to detect the end position of the workpiece carrier (12).

10. Processing station according to any of claims 7, 8 or 9, **characterized in that** the workpiece carrier (12) abuts the sealing element (77) of the gate element in the end position.

11. Processing station according to any of claims 7 to 10, **characterized by** a laser - unit (18) and a process unit (16) adapted as a laser optic element (61), which is mounted at a first mounting surface (33) through the means for mounting (43, 51, 55).

12. Processing station according to claim 11, **characterized in that** at another second mounting surface (33) a process unit (16) adapted as an intake air element (67) is mounted, at a third mounting surface (33) a processing unit (16) adapted as an outlet air element (63) is mounted, and at a fourth mounting surface (33) a cover element (65) is mounted.

13. Construction set system for optically processing of workpieces, **characterized by** a central chamber device according to any of claims 1 to 5, at least one laser source unit, at least one moving unit, at least one media and technology unit, at least one gate and mechanic unit and at least one workpiece supply unit, wherein the units each comprise a flange surface which is adapted to be fixed at at least one of the mounting surfaces of the central chamber device through the means for mounting.

## Revendications

1. Dispositif formant chambre centrale pour des processus de fabrication et de contrôle destiné au montage de modules de processus universels, en particulier de modules de processus laser-optique ou de modules de processus assistés par laser, avec au moins un élément formant paroi (32) comportant au moins une surface de liaison (33) et un élément de recouvrement (35) qui sont reliés l'un à l'autre et une chambre de processus (40) renfermant une pièce à usiner, et dans lequel une unité d'usinage (16) peut être associée à l'élément formant paroi (32) ou à l'élément de recouvrement (35), **caractérisé en ce que** chaque surface de liaison (33) comporte une ouverture (41) dans la chambre de processus (40) et un moyen pour mettre en place (43, 55) une unité d'usinage (16),
l'élément formant paroi (32) présente quatre surfaces de liaison (33), en particulier de même taille, qui sont disposées de telle sorte qu'avec l'élément de recouvrement (35), elles entourent une chambre de processus (40) parallélépipédique,
l'élément de recouvrement (35) présente lui aussi une surface de liaison (33) avec une ouverture (45) dans la chambre de processus (40) et un moyen pour mettre en place (47, 55) une unité d'usinage (16),
les moyens pour mettre en place (43, 55) de toutes les surfaces de liaison (33) sont standardisés, et
il est prévu une ouverture de sas du côté opposé à l'élément de recouvrement (35) à travers laquelle la pièce peut être introduite dans la chambre de processus (40), un élément de sas, sur lequel un élément d'étanchéité (77) est mis en place de manière élastique, étant placé dans l'ouverture de sas.

2. Dispositif formant chambre centrale selon la revendication 1, **caractérisé en ce que** l'élément formant paroi (32) est constitué de quatre parties formant paroi reliées les unes aux autres, chaque partie formant paroi comportant une surface de liaison (33).

3. Dispositif formant chambre centrale selon la revendication 2, **caractérisé en ce qu'**il est prévu un cadre support sur lequel sont montées les parties formant paroi (32.1 - 32.4) et/ou l'élément de recouvrement (35).

4. Dispositif formant chambre centrale selon la revendication 2, **caractérisé en ce qu'**il est prévu un cadre support dont les éléments supports individuels forment l'élément formant paroi et les surfaces de liaison.

5. Dispositif formant chambre centrale selon l'une quelconque des revendications précédentes, **caractérisé en ce que** le moyen pour mettre en place (43) comporte plusieurs alésages (43) pour recevoir des vis de fixation (55).

6. Dispositif formant chambre centrale selon l'une quelconque des revendications précédentes, **caractérisé en ce qu'**il est prévu au moins un élément de recouvrement (65) qui est posé sur une surface de liaison (33) d'un élément formant paroi (32.3) par le moyen pour mettre en place et qui recouvre l'ouverture (41).

7. Poste d'usinage avec au moins un module de processus pour la réalisation d'une fonction prédéterminée, en particulier une fonction optique, **caractérisé par** un dispositif formant chambre centrale (30) selon l'une quelconque des revendications 1 à 6.

8. Poste d'usinage selon la revendication 7, **caractérisé par** un dispositif de transport (14) qui transporte un porte-pièce (12) dans et hors du poste d'usinage (10), et une unité de levage et de positionnement (83) qui est conçue pour transporter le porte-pièce (12) dans la chambre de processus (40) du dispositif formant chambre centrale (30).

9. Poste d'usinage selon la revendication 7 ou 8, **caractérisé en ce qu'**un premier commutateur de sécurité (91) est monté dans le dispositif formant chambre centrale (30) et un deuxième commutateur de sécurité (93) est monté dans l'unité de levage et de positionnement (83) pour détecter la position terminale du porte-pièce (12).

10. Poste d'usinage selon l'une quelconque des revendications 7, 8 ou 9, **caractérisé en ce que** le porte-pièce (12) s'appuie sur l'élément d'étanchéité (77) de l'élément de sas dans une position terminale.

11. Poste d'usinage selon l'une quelconque des revendications 7 à 10, **caractérisé par** une unité laser (18) et une unité d'usinage (16) conçue comme un élément optique à laser (61) qui est montée sur une première surface de liaison (33) par le moyen pour mettre en place (43, 51, 55).

12. Poste d'usinage selon la revendication 11, **caractérisé en ce qu'**une unité d'usinage (16) conçue comme élément d'admission d'air (67) est montée sur une autre deuxième surface de liaison (33), une unité d'usinage (16) conçue comme élément d'échappement d'air (63) est montée sur une troisième surface de liaison (33) et un élément de recouvrement (65) est monté sur une quatrième surface de liaison (33).

13. Système modulaire pour l'usinage optique de pièces, **caractérisé par** un dispositif formant chambre centrale selon l'une quelconque des revendications 1 à 5, au moins une unité modulaire à source laser, au moins une unité modulaire de déplacement, au moins une unité modulaire de fluides et de technologie, au moins une unité modulaire de sas et de mécanique et au moins une unité modulaire d'amenée de pièces, les unités modulaires comportant chacune une surface de bridage qui peut être mise en place sur au moins l'une des surfaces de liaison du dispositif formant chambre centrale par le moyen pour mettre en place.
